(19) Europäisches Patentamt
European Patent Office
Office européen des brevets

(11) **EP 4 212 238 A1**

(12) **EUROPEAN PATENT APPLICATION**
published in accordance with Art. 153(4) EPC

(43) Date of publication:
**19.07.2023 Bulletin 2023/29**

(21) Application number: **22862402.9**

(22) Date of filing: **01.07.2022**

(51) International Patent Classification (IPC):
**B01J 8/44** (2006.01)

(52) Cooperative Patent Classification (CPC):
**B01J 8/44**

(86) International application number:
**PCT/KR2022/009532**

(87) International publication number:
**WO 2023/090564 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.11.2021 KR 20210159855**

(71) Applicant: **LG CHEM, LTD.
Yeongdeungpo-gu,
Seoul 07336 (KR)**

(72) Inventors:
• **LEE, Hong Min
Daejeon 34122 (KR)**

• **SHIN, Joon Ho
Daejeon 34122 (KR)**
• **LEE, Jeong Seok
Daejeon 34122 (KR)**
• **HWANG, Moon Sub
Daejeon 34122 (KR)**
• **SONG, Jong Hun
Daejeon 34122 (KR)**
• **YOUK, Kyung Seog
Daejeon 34122 (KR)**

(74) Representative: **Hoffmann Eitle
Patent- und Rechtsanwälte PartmbB
Arabellastraße 30
81925 München (DE)**

(54) **SPARGER AND REACTOR COMPRISING SAME**

(57)    Provided is a sparger including: a main body including a plurality of holes, a protruding pipe extending upward along an outer circumferential surface of the plurality of holes, and a side pipe extending from a side surface of the protruding pipe.

【FIG. 1】

# Description

[Technical Field]

CROSS-REFERENCE TO RELATED APPLICATIONS

The present application claims the benefit of priority to Korean Patent Application No. 10-2021-0159855, filed on November 18, 2021, the entire contents of which are incorporated herein as a part of the specification.

Technical Field

The present invention relates to a sparger, and more particularly, to a sparger which may improve both a mixing effect and a fouling prevention effect, and a reactor comprising the same.

[Background Art]

An $\alpha$-olefin (alpha-olefin) is an important material which is used in comonomers, cleaning agents, lubricants, plasticizers, and the like and is commercially widely used, and in particular, 1-hexene and 1-octene are often used as a comonomer for adjusting the density of polyethylene in the production of linear low-density polyethylene (LLDPE).

The $\alpha$-olefins such as 1-hexene and 1-octene are produced representatively by an oligomerization reaction of ethylene. The ethylene oligomerization reaction is performed by an oligomerization reaction (trimerization reaction or tetramerization reaction) of ethylene in the presence of a catalyst by using ethylene as a reactant, and the product produced by the reaction includes not only a multi-component hydrocarbon mixture including 1-hexene and 1-octene to be desired but also a small amount of by-products including a polymer material of C20+ during a catalytic reaction. Since the product and the by-products are relatively heavy, they come down to a lower portion of a reaction region in a reactor. Thus, fouling in which holes of a sparger are blocked may occur and a product may be deposited on the sparger.

Thus, conventionally, there is a problem in incurring maintenance cost due to fouling occurrence, and the product is not obtained well by decreased mixing efficiency.

**[Disclosure]**

[Technical Problem]

An object of the present invention is to provide a sparger which is designed to increase mixing efficiency and to decrease fouling occurrence, and a reactor comprising the sparger, in order to solve the above problems mentioned in Background Art.

[Technical Solution]

In one general aspect, a sparger includes: a main body including a plurality of holes, a protruding pipe extending upward along an outer circumferential surface of the plurality of holes, and a side pipe extending from a side surface of the protruding pipe.

In another general aspect, a reactor includes: a monomer supply line through which a gaseous monomer stream is supplied, and the sparger of claim 1 for dispersing the gaseous monomer stream supplied through the monomer supply line.

[Advantageous Effects]

According to the sparger of the present invention, a gaseous material which is a reactant is supplied to a reaction region in a reactor through a protruding pipe extending upward along an outer circumferential surface of holes of the sparger, thereby minimizing a fouling phenomenon in which the holes of the sparger are blocked by a reaction product or heavy by-products. Thus, an operation cycle of the reactor may be extended, and maintenance cost due to fouling may be reduced.

In addition, the gaseous material is sprayed downward through a side pipe extending from a side surface of the protruding pipe, thereby improving the mixing efficiency of an upper portion of the sparger. Thus, a reaction product may be discharged well to a product outlet to allow operation in accordance with a reaction design such as conversion rate improvement.

[Description of Drawings]

FIG. 1 is a plan view of a sparger according to an exemplary embodiment of the present invention.
FIG. 2 is a cross-sectional view of the sparger according to an exemplary embodiment of the present invention.
FIGS. 3a and 3b are cross-sectional views of a side pipe according to an exemplary embodiment of the present invention.
FIG. 4 is a reactor according to an exemplary embodiment of the present invention and a process flow diagram.
FIGS. 5a and 5b are a plan view and a cross-sectional view of a sparger according to the comparative examples.

[Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

In the present invention, the term "stream" may refer to a fluid flow in the process, or may refer to the fluid itself flowing in a moving line (pipe). Specifically, the "stream" may refer to both a fluid itself flowing in a pipe connecting each device and a fluid flow. In addition, the fluid may refer to inclusion of any one or more of gas, liquid, and solid.

In the present invention, "C#", in which "#" is a positive integer, represents all hydrocarbons having # carbon atoms. Therefore, the term "C10" represents a hydrocarbon compound having 10 carbon atoms. In addition, the term "C#+" represents all hydrocarbon molecules having # or more carbon atoms. Therefore, the term "C10+" represents a mixture of hydrocarbons having 10 or more carbon atoms.

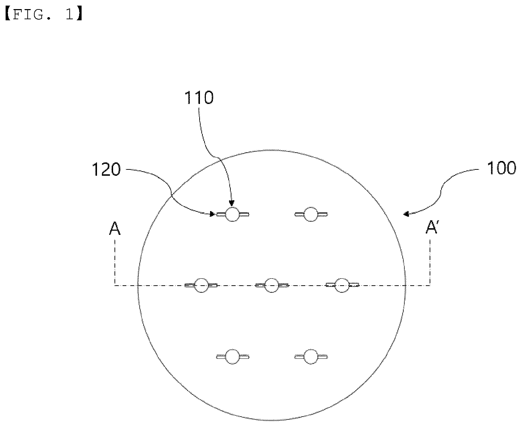

Hereinafter, the present invention will be described by referring to FIGS. 1 to 4, for better understanding of the present invention.

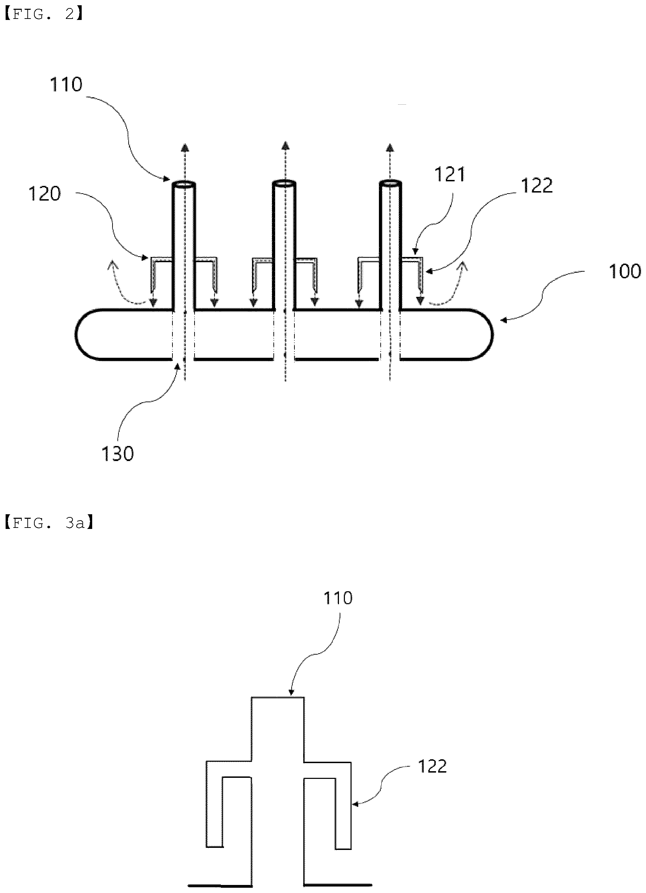

First, referring to FIG.1 and FIGS. 2 which is a longitudinal sectional view based on A-A' of FIG. 1, the sparger 100 according to the present invention may include a main body including a plurality of holes 130, a protruding pipe 110 extending upward along an outer circumferential surface of the plurality of holes, and a side pipe 120 extending from a side surface of the protruding pipe.

According to an exemplary embodiment of the present invention, the sparger 100 is, for example, provided in a lower portion of a reactor 200, so that a gaseous monomer stream supplied to the reactor 200 may be dispersed upward and simultaneously, a liquid reaction medium in the reactor 200 may be mixed to improve a conversion rate of the monomer.

A main body of the sparger 100 may be freely designed depending on the shape of the reactor 200, and for example, the main body of the sparger 100 may be formed in a disc shape having an outer circumferential surface having the same structure as the inner surface of the reactor 200. Here, the outer circumferential surface of the main body may be designed to be closely adhered to the inner surface of the reactor 200.

The main body may have a diameter of, for example, 100 mm to 1500 mm, 100 mm to 1000 mm, or 100 mm to 500 mm, and a thickness of, for example, more than 0 mm and 100 mm or less, 1 mm to 50 mm, or 10 mm to 30 mm.

According to an exemplary embodiment of the present invention, the main body of the sparger 100 may include a hole 130 formed by penetrating upper and lower surfaces of the main body of the sparger 100. The hole 130 may be formed in plural at equal intervals in the center and along the circumference of the main body. Specifically, a gaseous material, for example, a monomer stream, which is supplied from the lower portion of the reactor, may be uniformly sprayed into a reaction region provided with a reaction medium inside the reactor 200, through the holes 130 formed at equal intervals in the center and along the circumference of the main body.

When the main body has a disc shape, the diameter of the hole 130 may be 1% to 50%, 1% to 30%, or 1% to 10% of the diameter of the main body. When the diameter of the hole 130 is within the range, the shutdown of the reactor due to the fouling in the sparger may be prevented, and also the mixing efficiency in the reactor is increased to minimize a dead volume, and thus, an effect of increasing a reaction conversion rate may be obtained.

The plurality of holes may have the same diameter, and holes having a relatively large diameter and holes having a relatively small diameter may be included. When the diameters of the holes are differently formed as such, a portion which is not mixed with a gaseous material passing through a hole having a relatively large diameter may be mixed with a gaseous material passing through a hole having a small diameter, and thus, the mixing efficiency of a liquid reaction medium in the reactor 200 may be increased.

Meanwhile, according to an exemplary embodiment of the present invention, the sparger 100 may include a protruding pipe 110 extending upward along the outer circumferential surface of each of the plurality of holes 130. The outer circumferential surface may refer to the outer circumferential surface of an opening formed by the hole 130 in the upper surface of the main body of the sparger 100. Therefore, the main body of the sparger 100 and the protruding pipe 110 may be integrally formed. Meanwhile, "upward" may refer to "toward the reaction region" provided with a reaction medium in the reactor 200.

The gaseous material, for example, a gaseous monomer stream, which is supplied from the lower portion of the sparger 100 through the hole 130, may pass through the main body of the sparger 100 through the hole, be dispersed in the reaction region through the protruding pipe 110, and be supplied. A flow of the gaseous material is indicated by a dotted line in FIG. 2.

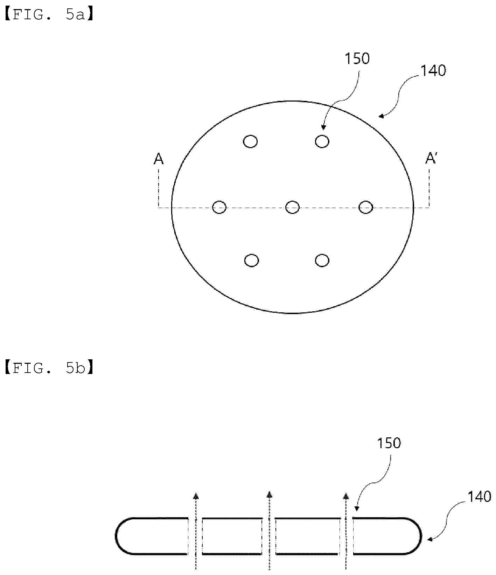

That is, referring to FIGS. 5A and 5B regarding a conventional sparger 140, it is recognized that the upper portion of the main body of the sparger 140 and the upper surface of the opening of the hole 150 have the same or similar surface height. When the gaseous material (reactant) is supplied to the reaction region provided with the reaction medium in the upper portion of the sparger 140 through the sparger 140, the reaction product, heavy byproduct, and the like produced by the reaction have a higher density than the reaction medium and sink down, and thus, blockage of the hole 150 (fouling) easily occurs. Furthermore, as the reaction proceeds, the reaction product and the heavy by-products are deposited on the upper surface of the main body of the sparger 140, and thus, uniform mixing was impossible.

However, the sparger 100 according to an exemplary embodiment of the present invention is provided with a protruding pipe 110, whereby the surface height of the protruding pipe 110 may be formed to be higher than the surface height of the upper surface of the main body of the sparger 100. Thus, a linear velocity of the gaseous monomer stream which passes through the sparger 100 and is supplied to the reactor is maintained constant, while a possibility of fouling occurrence may be lowered. Further, a wash cycle to shut down the reactor 200 and wash the inside of the reactor 200 and devices such as the sparger 100 may be extended. Furthermore, in the present invention in which the gaseous monomer is supplied to the reaction region through the protruding pipe 110, the gaseous monomer may be supplied to a deeper reaction region to secure a larger uniform reaction region as compared with the conventional technology, and thus, the performance of the reactor, for example, the conversion rate may be improved.

For this, the relationship between a height ($L_P$) of the protruding pipe, that is, a difference ($L_P$) between a surface height of an upper surface of the sparger 140 and a surface height of the protruding pipe and a thickness ($L_B$) of the main body of the sparger 100 may satisfy the following Equation 1:

$$[\text{Equation 1}]$$

$$L_P \geq L_B$$

wherein $L_P$ is a height of the protruding pipe, and $L_B$ is a thickness of the main body.

More specifically, the height ($L_P$) of the protruding pipe may satisfy $10L_B \geq L_P \geq L_B$, more specifically, $5L_B \geq L_P \geq L_B$. Within the range, an effect of maximizing a uniform reaction region and preventing the fouling of holes may be achieved.

Meanwhile, according to an exemplary embodiment of the present invention, the sparger 100 of the present invention may include a side pipe 120 extending from the side surface of the protruding pipe 110. The side pipe 120 may include a horizontal pipe part 121 which horizontally extends from the side surface of the protruding pipe 110 and a downward pipe part 122 which extends downward from the end of the horizontal pipe part. The end of the downward pipe part 122 and the upper end of the main body may be formed to be spaced apart.

Specifically, a gaseous material (gaseous monomer) supplied from the lower portion of the main body of the sparger 100 through a plurality of holes 130 passes through the protruding pipe 110 and moves upward, and in this process, a part of the gaseous material moving through the protruding pipe 110 may be discharged through the side pipe 120. That is, a part of the gaseous material passes through the horizontal pipe part 121 which extends in a direction parallel to the upper surface of the sparger 100, of the side pipe 120, and the downward pipe part 122 which extends downward so as to face the upper surface of the sparger 100, of the side pipe 120, sequentially, thereby being sprayed on the upper surface of the main body of the sparger 100.

Here, the flow rate of the gaseous material discharged through the side pipe 120 may be 5% to 150 of the flow rate of the gaseous material supplied through the holes. That is, when the flow rate of the gaseous material discharged from the side pipe 120 is 5% or more, the effect of increasing the mixing efficiency to the upper surface of the main body of the sparger 100 may be achieved, and when the flow rate is 15% or less, the gaseous material may be sufficiently transferred to the reaction region through the protruding pipe 110 and the reaction region is secured to the maximum, thereby obtaining an effect such as an increase in a conversion rate.

As described above, since the reaction product, the heavy by-products, and the like produced by the reaction has a relatively high density, they may sink toward the sparger 100 or be deposited on the sparger 100. The product and the heavy by-products of the reaction may be mixed by the flow of the gaseous material which is discharged and sprayed through the downward pipe part 122, which increases the mixing efficiency to minimize a dead volume, and on the other hand, may obtain an effect of increasing a reaction conversion rate.

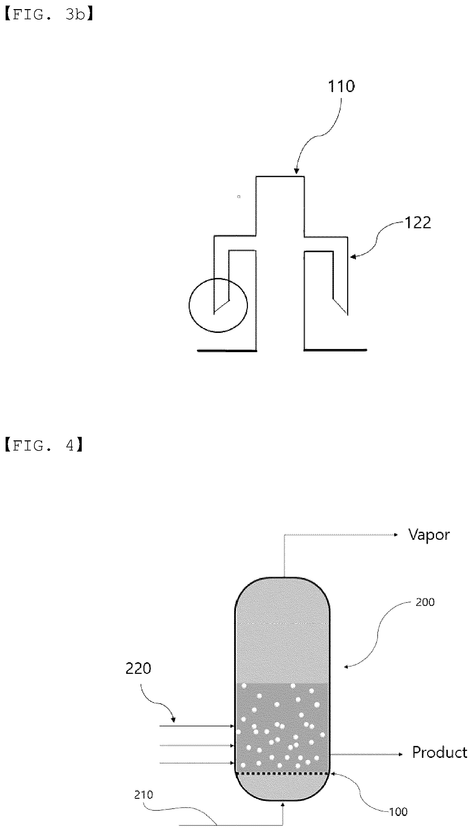

According to an exemplary embodiment of the present invention, the end of the downward pipe part 122 may include an inclined part so that the surface height of a portion adjacent to the protruding pipe 110 is high. That is, referring to FIGS. 3a and 3b, the surface height of the end of the downward pipe part 122 may be formed to be the same as shown in FIG. 3a, or the surface height of the end of the downward pipe part 122 is formed so that the surface height of the portion adjacent to the protruding pipe 110 is high as shown in FIG. 3b, and thus, the inclined part may be entirely introduced. When the inclined part is introduced to the end of the downward pipe part 122, the spraying strength of the gaseous material discharged through the downward pipe part 122 may be increased, thereby increasing the mixing efficiency for the upper surface of the main body of the sparger 100.

According to an exemplary embodiment of the present invention, an angle between the horizontal pipe part 121 and the downward pipe part 122 may be 75° to 135°. As described above, the sparger 100 may include a plurality of holes 130 formed along the circumference in the center of the main body. For example, in the case of hole 130 of which the position is adjacent to the circumference of the main body of the sparger 100, that is, the hole 130 adjacent to the side wall of the reactor, the angle between the horizontal pipe part 121 and the downward pipe part 122 may be formed to be larger than 90°. Thus, the gaseous material is sprayed and dispersed more directly on/in the reaction product, the heavy by-products, and the like deposited on a part where the reactor side wall and the sparger 100 are connected, thereby further improving the mixing efficiency.

Likewise, the number of side pipes 120 extending from one protruding pipe 110 may be 2 to 4. For example, when a spacing between holes 130 of the sparger 100 is narrow, the number of the side pipe 120 extending from the one protruding pipe 110 may be 2, and when a spacing between holes 130 is large, the number may be 4, thereby improving the mixing efficiency depending on the spraying of the gaseous material.

Meanwhile, according to the present invention, a reactor 200 comprising the sparger 100 is provided. Specifically, as shown in FIG. 4, the reactor 200 may include a monomer supply line 210 through which a gaseous monomer stream is supplied; and the sparger 100 according to the present invention for dispersing the gaseous monomer stream supplied through the monomer supply line 210.

According to an exemplary embodiment of the present invention, the reactor 200 may be a reactor appropriate for a continuous process. For example, the reactor 200 may include any one or more reactors selected from the group consisting of a continuous stirred-tank reactor, a plug flow reactor, and a bubble column reactor. As a specific example, the reactor 200 may be a bubble column reactor. Thus, the monomer may be continuously reacted.

According to an exemplary embodiment of the present invention, the reactor 200 may be for producing an oligomer by oligomerizing a monomer in the presence of a catalyst and a solvent.

That is, referring to FIG. 4, a catalyst, a cocatalyst, and a solvent may be supplied from the side portion of the reactor 200 to the reaction region in the reactor through each supply line 220. The catalyst, the cocatalyst, and the solvent may be supplied to each separate supply line 220 as shown in FIG. 4, and the catalyst may be mixed with the solvent, the cocatalyst may be mixed with the solvent, and supplied through two supply lines.

The monomer may include ethylene. Specifically, a gaseous monomer stream including an ethylene monomer is introduced into the reactor 200 through a monomer supply line 210 provided in a lower portion of the reactor 200, and the gaseous monomer stream is dispersed by the sparger 100 and oligomerized in a reaction medium in the reactor 200, thereby producing an $\alpha$-olefin product to be desired.

According to an exemplary embodiment of the present invention, a spraying part extending from the monomer supply line and provided may be further included. A gaseous ethylene monomer transferred through the monomer supply line 210 may be sprayed through the spray part and pass through the sparger 100.

The spray part may be formed to be extended from the monomer supply line 210 and branched into multiple pipes, and a spray nozzle may be formed at each end of the branched multiple pipes. Specifically, the gaseous ethylene monomer transferred through the monomer supply line 210 may be introduced to the reactor 200 through the spray nozzle of the spray part. As such, the gaseous ethylene monomer introduced to the reactor 200 may pass through the sparger 100 and be sprayed in the upper direction of the reactor 200. As such, since the spray part is provided, an additional apparatus such as a conventional deflector is not needed, and a difficulty in maintaining a constant linear velocity of the gaseous monomer stream when the conventional deflector is used may be solved. As such, the linear velocity of the gaseous monomer stream is maintained constant, whereby a dispersion degree of a reaction solution and the by-products in the reactor may be maintained uniform and accumulation of the by-products on one side may be prevented.

The oligomerization reaction is carried out in a lower or a middle of the reaction region of the reactor 200, and the oligomerization reaction of the monomer may be carried out in a liquid state being dissolved in a solvent in the presence of a catalyst and a cocatalyst.

The oligomerization reaction may refer to a reaction in which a monomer is oligomerized. The oligomerization may be referred to as trimerization or tetramerization depending on the number of monomers to be polymerized, and these are collectively called multimerization.

In the oligomerization reaction of the monomer, an unreacted monomer and a vaporized solvent in the reactor 200 may be discharged to the upper portion of the reactor 200, which may be circulated to the reactor 200 and reused in the oligomerization reaction of the monomer. In addition, the oligomer produced by the oligomerization reaction of the monomer may be obtained by separation through the lower side of the reactor 200.

The $\alpha$-olefin, which is an important material used in copolymers, cleaning agents, lubricants, plasticizers, and the like, is commercially widely used, and in particular, 1-hexene and 1-octene are often used as a comonomer for adjusting the density of polyethylene in the preparation of linear low-density polyethylene (LLDPE). The $\alpha$-olefin such as 1-hexene and 1-octene may be produced by, for example, a trimerization reaction or tetramerization reaction of an ethylene monomer.

The oligomerization reaction of the monomer may be carried out by a homogeneous liquid phase reaction, a slurry reaction in which the catalyst is in the form of being partially not dissolved or completely not dissolved, a two-phase liquid/liquid reaction, or a bulk phase reaction or gas phase reaction of which the product acts as a main medium, in the presence or absence of a solvent, by applying the reaction system and a common contact technology.

The solvent, the catalyst, and the cocatalyst may be supplied in a liquid phase to the lower side of the reactor 200.

The catalyst may include a transition metal source. The transition metal source may be, for example, a compound including one or more selected from the group consisting of chromium (III) acetylacetonate, chromium (III) chloride tetrahydrofuran, chromium (III) 2-ethylhexanoate, chromium (III) tris(2,2,6,6-tetramethyl-3,5-heptanedionate), chromium (III) benzoylacetonate, chromium (III) hexafluoro-2,4-pentanedionate, chromium (III) acetate hydroxide, chromium (III) acetate, chromium (III) butyrate, chromium (III) pentanoate, chromium (III) laurate, and chromium (III) stearate.

The cocatalyst may include, for example, one or more selected from the group consisting of trimethyl aluminum, triethyl aluminum, triisopropyl aluminum, triisobutyl aluminum, ethylaluminum sesquichloride, diethylaluminum chloride, ethyl aluminum dichloride, methylaluminoxane, modified methylaluminoxane, and borate.

The solvent used in the oligomerization reaction of a monomer may include one or more selected from the group consisting of n-pentane, n-hexane, n-heptane, cyclohexane, methylcyclohexane, octane, cyclooctane, decane, dodecane, benzene, xylene, 1,3,5-trimethylbenzene, toluene, ethylbenzene, chlorobenzene, dichlorobenzene, and trichlorobenzene.

As such, in the process of oligomerizing a monomer in the presence of the catalyst and the solvent, adhesive by-products such as polymers are produced in addition to an oligomer product. The by-products may block holes formed in the sparger 100 to cause fouling.

Regarding this, the reactor 200 according to the present invention uses the sparger 100 according to the present invention described above, thereby preventing blockage of the holes in the sparger 100 due to the fouling to extend the wash cycle of the reactor 200, and thus, preventing a production decrease due to a decreased operation time and reducing costs required in the wash process.

According to an exemplary embodiment of the present invention, in the reactor 200, an apparatus required for oligomer production such as a valve, a condenser, a reboiler, a pump, a cooling facility, a filter, an agitator, a compressor, and a mixer may be further installed, if necessary.

Hereinabove, the sparger according to the present invention and the reactor comprising the same have been described and illustrated in the drawings; however, the description and the illustration in the drawings are the description and the illustration of only core constitutions for understanding of the present invention, and in addition to the process and apparatus described above and illustrated in the drawings, the process and the apparatus which are not described and illustrated separately may be appropriately applied and used for using the sparger according to the present invention and the reactor comprising the same.

Hereinafter, the present invention will be described in more detail by the examples. However, the following examples are provided for illustrating the present invention, and it is apparent to a person skilled in the art that various modifications and alterations may be made without departing from the scope and spirit of the present invention and the scope of the present invention is not limited thereto.

**Example 1**

A sparger 100 according to FIG. 1 according to the present invention was provided in a bubble column reactor 200, as shown in FIG. 4, and the oligomerization reaction of an ethylene monomer was performed. Specifically, a solvent, a catalyst, and a cocatalyst were supplied to a lower side of the reactor 200, a gaseous ethylene monomer stream was supplied through a monomer supply line 210 provided in a lower portion of the reactor 200, and the sparger 100 was used to disperse the stream upward to perform an oligomerization reaction in a liquid reaction medium in the reactor 200. An $\alpha$-olefin produced by the oligomerization reaction was separated in the lower side of the reactor 200 and obtained, and an unreacted monomer and a vaporized solvent were discharged to an upper portion of the reactor 200.

At this time, the diameter of the main body of the sparger 100 was formed to be 300 mm, the thickness of the main body of the sparger 100 was formed to be 20 mm, the height of the protruding pipe 110 was formed to be 60 mm, and a side pipe 120 was provided in the side surface of the protruding pipe 110.

In this case, it was confirmed that a part of the gaseous ethylene monomer stream passed through the protruding pipe 110 of the sparger 100 and was supplied to a reaction region, and the remaining ethylene monomer stream passed through a side pipe and was sprayed on the upper surface of the main body of the sparger 100.

As a result of Example 1, the mixing efficiency of the ethylene monomer was increased to increase the production amount of the $\alpha$-olefin. In addition, fouling occurrence in the sparger 100 was decreased to extend a shutdown cycle for washing the reactor 200.

**Comparative Example 1**

The process was performed in the same manner as in Example 1, except that a sparger 140 which did not have the protruding pipe and the side pipe, so that the surface height of the hole 150 and the surface height of the main body of the sparger 140 were the same, as shown in FIGS. 5A and 5B, was used as the sparger 140,

In this case, it was confirmed that the mixing efficiency of the ethylene monomer was decreased as compared with Example 1 so that the production amount of $\alpha$-olefin was decreased, and a fouling occurrence rate in the sparger 140 was increased to shorten the shutdown cycle for washing the reactor 200.

**Claims**

1. A sparger comprising:

   a main body including a plurality of holes;
   a protruding pipe extending upward along an outer circumferential surface of the plurality of holes; and

a side pipe extending from a side surface of the protruding pipe.

2. The sparger of claim 1, wherein the side pipe includes a horizontal pipe part which horizontally extends from the side surface of the protruding pipe and a downward pipe part which extends downward from an end of the horizontal pipe part.

3. The sparger of claim 2, wherein the end of the downward pipe part and an upper end of the main body are spaced apart.

4. The sparger of claim 2, wherein the end of the downward pipe part includes an inclined part so that a surface height of a portion adjacent to the protruding pipe is high.

5. The sparger of claim 2, wherein an angle between the horizontal pipe part and the downward pipe part is 75° to 135°.

6. The sparger of claim 1, wherein a gaseous material supplied from a lower portion of the main body through the plurality of holes passes through the protruding pipe and moves upward, and a part of the gaseous material moving through the protruding pipe is discharged through the side pipe.

7. The sparger of claim 6, wherein a flow rate of the gaseous material discharged through the side pipe is 5% to 150 of a flow rate of the gaseous material supplied through the holes.

8. The sparger of claim 1, wherein the sparger satisfies the following Equation 1:

$$[Equation\ 1]$$

$$L_P \geq L_B$$

wherein $L_P$ is a height of the protruding pipe, and $L_B$ is a thickness of the main body.

9. The sparger of claim 1, wherein the number of the side pipes extending from one protruding pipe is 2 to 4.

10. A reactor comprising:

a monomer supply line through which a gaseous monomer stream is supplied; and

the sparger of claim 1 for dispersing the gaseous monomer stream supplied through the monomer supply line.

【FIG. 1】

【FIG. 2】

【FIG. 3a】

【FIG. 3b】

【FIG. 4】

【FIG. 5a】

150    140

A          A'

【FIG. 5b】

150

140

# EP 4 212 238 A1

## INTERNATIONAL SEARCH REPORT

| International application No. |
|---|
| **PCT/KR2022/009532** |

### A. CLASSIFICATION OF SUBJECT MATTER

**B01J 8/44**(2006.01)i

According to International Patent Classification (IPC) or to both national classification and IPC

### B. FIELDS SEARCHED

Minimum documentation searched (classification system followed by classification symbols)

B01J 8/44(2006.01); B01J 19/00(2006.01); B01J 8/18(2006.01); B01J 8/22(2006.01); B82B 1/00(2006.01);
C01C 3/02(2006.01); C01D 15/02(2006.01); C02F 3/20(2006.01); C07C 253/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스파저(sparger), 돌출 배관(protruding pipe), 측면 배관(side pipe), 반응기(reactor), 기상(gas phase), 단량체(monomer), 파울링(fouling), 믹싱(mixing)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0105209 A (SK INNOVATION CO., LTD.) 26 August 2021 (2021-08-26)<br>See claim 1; paragraphs [0017]-[0018], [0022], [0035]-[0037] and [0081]-[0082]; and figures 1-3 and 6. | 1-10 |
| X | KR 10-2014-0124457 A (LG CHEM, LTD.) 27 October 2014 (2014-10-27)<br>See claims 1-4; paragraphs [0048]-[0052]; and figure 2. | 1-10 |
| A | EP 0832877 A2 (NITTO KAGAKU KOGYO KABUSHIKI KAISHA) 01 April 1998 (1998-04-01)<br>See entire document. | 1-10 |
| A | KR 10-2019-0132118 A (RESEARCH INSTITUTE OF INDUSTRIAL SCIENCE & TECHNOLOGY) 27 November 2019 (2019-11-27)<br>See entire document. | 1-10 |
| A | CN 108031410 A (BEIJING HUAFU ENGINEERING CO., LTD.) 15 May 2018 (2018-05-15)<br>See entire document. | 1-10 |

✓ Further documents are listed in the continuation of Box C.    ✓ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **30 September 2022** | **05 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

<table>
<tr><td colspan="2">International application No.</td></tr>
<tr><td colspan="2"><b>PCT/KR2022/009532</b></td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | KR 10-2100463 B1 (DAEYOUNGENG CO., LTD.) 13 April 2020 (2020-04-13)<br>See entire document. | 1-10 |

Form PCT/ISA/210 (second sheet) (July 2022)

### INTERNATIONAL SEARCH REPORT
**Information on patent family members**

| International application No. |
| --- |
| **PCT/KR2022/009532** |

| Patent document cited in search report | | | Publication date (day/month/year) | Patent family member(s) | | | Publication date (day/month/year) |
| --- | --- | --- | --- | --- | --- | --- | --- |
| KR | 10-2021-0105209 | A | 26 August 2021 | WO | 2021-167345 | A1 | 26 August 2021 |
| KR | 10-2014-0124457 | A | 27 October 2014 | KR | 10-1651315 | B1 | 25 August 2016 |
| EP | 0832877 | A2 | 01 April 1998 | EP | 0832877 | A3 | 27 January 1999 |
| | | | | EP | 0832877 | B1 | 21 November 2001 |
| | | | | ES | 2166953 | T3 | 01 May 2002 |
| | | | | JP | 03-091168 | B2 | 25 September 2000 |
| | | | | JP | 10-152463 | A | 09 June 1998 |
| | | | | JP | 11-043323 | A | 16 February 1999 |
| | | | | JP | 3999850 | B2 | 31 October 2007 |
| | | | | US | 6057471 | A | 02 May 2000 |
| KR | 10-2019-0132118 | A | 27 November 2019 | None | | | |
| CN | 108031410 | A | 15 May 2018 | None | | | |
| KR | 10-2100463 | B1 | 13 April 2020 | None | | | |

Form PCT/ISA/210 (patent family annex) (July 2022)

## REFERENCES CITED IN THE DESCRIPTION

**Patent documents cited in the description**

- KR 1020210159855